# EUROPEAN PATENT APPLICATION

(11) **EP 4 684 989 A1**
(43) Date of publication of application: **28.01.2026**
(21) Application number: 24775150.6
(22) Date of filing: 18.03.2024
(51) Int. Cl.: B60J 10/17, B60J 10/16, B60J 10/75, B60J 10/76, C09J 7/21, C09J 7/35, C09J 7/38, C09J 5/06, B32B 7/12, B32B 27/12

(54) **SLIP TAPE FOR AUTOMOBILE WEATHER STRIP**

(30) Priority: 21.03.2023 KR 20230036915
(71) Applicant: Jin, Chan Kyu, Ulsan 44920 (KR)
(72) Inventor: Jin, Chan Kyu, Ulsan 44920 (KR)
(74) Representative: dompatent
(86) International application number: PCT/KR2024/003339
(87) International publication number: WO 2024/196102

(57) **Abstract**

The present invention relates to a slip tape for an automobile weather strip, wherein a circular loop shaped-ring having a smooth outer surface is provided to form a low coefficient of friction, the occurrence of joints is appropriately prevented and minimized to improve slipperiness, and the loop-shaped ring is knitted to be caught therein so as to fundamentally prevent the escape of the ring. This slip tape comprises: a base film capable of being attached to the outer surfaces of an automobile door belt weather strip and door glass weather strip and made of an olefin resin; an adhesive layer formed by applying an adhesive to the upper surface of the base film; and a ring fabric layer having the lower surface attached to the upper surface of the adhesive layer, formed of multifilament yarns made of polyester or nylon, including a plurality of loop-shaped upper rings knitted on the upper surface thereof to protrude upward so as to be in tight contact with the outer surface of automobile glass, and including lower rings flatly knitted on the lower surface thereof such that the upper rings are caught and supported thereby.

## Description

### [Technical Field]

The present invention relates to a slip tape for automobile weather strips, and more particularly to a slip tape for automobile weather strips having smooth, circular loop-shaped rings formed on an outer surface thereof to form a low coefficient of friction, to appropriately prevent or minimize the occurrence of annoying noise, and to improve slip properties, wherein the loop-shaped rings are knitted so as to be caught, thereby fundamentally preventing the rings from escaping.

### [Background Art]

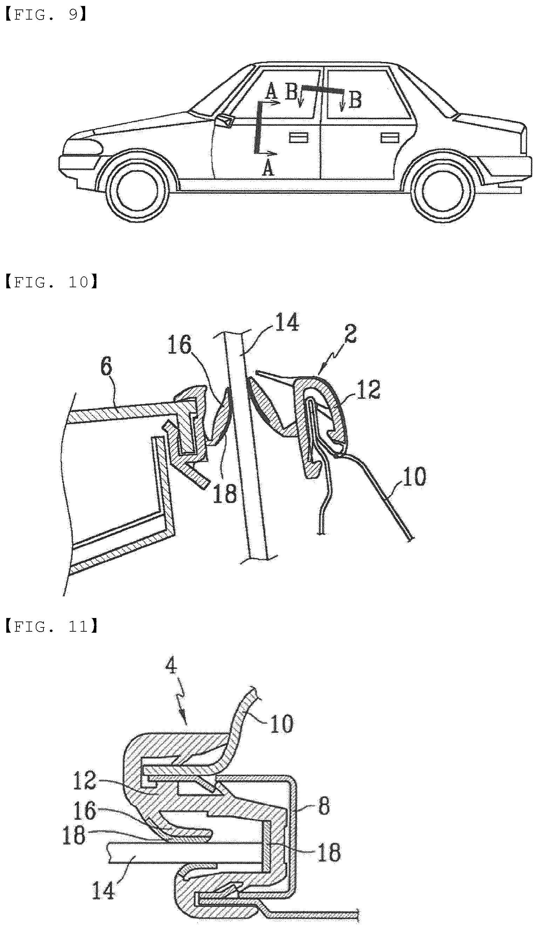

Generally, in order to prevent dust, water, wind, etc., from entering an internal space of a door where door glass of an automobile is received and to guide rising and lowering of the door glass, a door belt weather strip 2 and a door glass weather strip 4 are applied to an area where the door glass rises and lowers, as shown in FIGs. 9 to 11.

As shown in FIGs. 9 to 11, each of the conventional door belt weather strip 2 and the conventional door glass weather strip 4 includes an elastic body 12 fixed to a door trim 6, a door frame 8, and a door panel 10, a pressing portion 16 protruding from the elastic body 12 toward glass 14 so as to be in elastic contact with the glass 14, and a slip tape 18 disposed at the parts of the pressing portion 16 and the elastic body 12 that contact the glass 14 to prevent wear of the pressing portion 16 and the elastic body 12 and to allow the glass 14 to naturally move upward and downward.

Accordingly, the elastic body 12 is fixed to a vehicle body, and the pressing portion 16 contacts both surfaces or an edge surface of the glass 14, thereby preventing dust, water, wind, etc., from entering the internal space of the door where the door glass 14 is received, and guiding upward and downward movement of the door glass 14.

Here, a flocking slip tape manufactured using a flocking method, which is a fiber manufacturing method in which short fiber piles are fixed perpendicularly to an adhesive layer by electrostatic flocking, or a velvet slip tape, which replaces a flocking surface with a velvet fabric woven in a velvet weaving method, has been proposed as the slip tape.

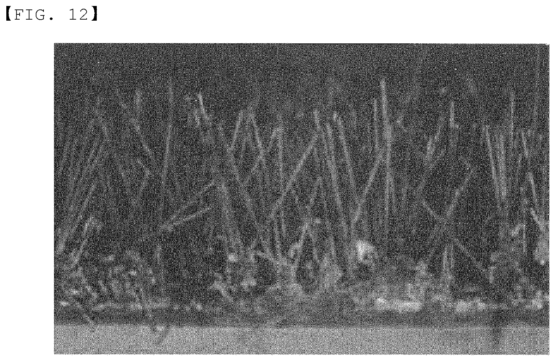

The flocking slip tape is manufactured by adhering a plurality of fiber piles cut to a certain length to an upper surface of a base film using an adhesive, as shown in FIG. 12, resulting in a structure where the short fiber piles with rough cut surfaces protrude perpendicularly to the upper surface of the base film. This perpendicular structure comes into contact with the glass of the automobile at a right angle.

However, the conventional technology described above has the following problems.

The conventional slip tape, even when manufactured using the flocking method or the velvet method, forms a structure where short fiber piles stand upright on the upper surface of the base film, with the cut surfaces of the fiber piles coming into contact with the glass. When the glass of the automobile moves upward, the upright fiber piles are bent upward simultaneously, and when the glass moves downward, fiber piles flip to the opposite side and are dragged downward. During this process, the cut surfaces of the fiber piles are not smooth, resulting in a high coefficient of friction between the fiber piles and the glass. As a result, the fiber piles adhered to the base film peel off the adhesive layer, leading to reduced durability and abrasion resistance. At the same time, abnormal noise (annoying noise) occurs at the friction surface between the fiber piles and the glass.

Particularly, in the case where the slip tape absorbs moisture, such as in case of rain, the peeling of fiber piles and the occurrence of annoying noise significantly increase.

In addition, the base film of the conventional slip tape is made of an olefin-based resin layer, which has low tensile strength and melting temperature. This causes the base film to easily break due to high extrusion force of the base film and high-temperature conditions when the slip tape is supplied during the extrusion molding of a weather strip.

### [Disclosure]

### [Technical Problem]

The present invention has been made in view of the above problems, and it is an object of the present invention to provide a slip tape for automobile weather strips having smooth, circular loop-shaped rings formed on an outer surface thereof to form a low coefficient of friction, to appropriately prevent or minimize the occurrence of annoying noise, and to improve slip properties, wherein the loop-shaped rings are knitted so as to be caught, thereby fundamentally preventing the rings from escaping.

It is another object of the present invention to provide a slip tape for automobile weather strips configured such that a separate nylon film is attached to a base film to reliably prevent breakage of the base film during extrusion molding of a weather strip.

### [Technical Solution]

In order to achieve the above objects, a slip tape for automobile weather strips according to the present invention includes a base film attached to an outer surface of each of a door belt weather strip and a door glass weather strip of an automobile, the base film being made of an olefin-based resin, an adhesive layer formed by applying an adhesive to an upper surface of the base film, and a ring fabric layer having a lower surface attached to an upper surface of the adhesive layer, the ring fabric layer being formed of multifilament yarn made of polyester or nylon, the ring fabric layer including a plurality of circular loop-shaped upper rings knitted on an upper surface thereof to protrude upward so as to be in tight contact with an outer surface of glass of the automobile and lower rings flatly knitted on a lower surface thereof such that the upper rings are caught and supported thereby.

Also, in the slip tape for automobile weather strips according to the present invention, each of the upper rings may be a sinker loop ring of a knitted fabric formed by knitting multifilament yarn made of polyester or nylon.

Also, in the slip tape for automobile weather strips according to the present invention, the ring fabric layer may be formed by blending spandex yarn into multifilament yarn made of polyester or nylon at a weight ratio of 10 to 30% of the total weight of the multifilament yarn.

Also, in the slip tape for automobile weather strips according to the present invention, the ring fabric layer may further include recessed rings formed at irregular intervals between the upper rings so as to be recessed farther downward than the upper rings to form irregular grooves.

Also, in the slip tape for automobile weather strips according to the present invention, the ring fabric layer may further include a flexible treatment layer formed by impregnating an amino-modified silicone-based softening agent emulsion on an outer surface of the ring fabric layer.

Also, in the slip tape for automobile weather strips according to the present invention, the flexible treatment layer may be configured such that the residual silicon solid content after drying is 1 to 3 g per square meter.

Also, in the slip tape for automobile weather strips according to the present invention, the ring fabric layer may have a vertical thickness of 0.4 to 0.6 mm and may be woven by blending DTY yarn with a denier of 50 to 75 and spandex yarn with a denier of 15 to 30 at a blending ratio of 10 to 30 weight percent.

Also, in the slip tape for automobile weather strips according to the present invention, the ring fabric layer may have a vertical thickness of 0.4 to 0.6 mm and may be woven by blending polyester or nylon-based 50d/36f DTY yarn or 50d/48f DTY yarn with spandex yarn at a blending ratio of 10 to 15 weight percent.

Also, in the slip tape for automobile weather strips according to the present invention, the upper rings may be formed at a density of 6,000 to 7,000 per square inch and each may have a height of 0.4 to 0.6 mm.

Also, in the slip tape for automobile weather strips according to the present invention, the base film may have a vertical thickness of 30 to 60 microns, the base film may further includes a nylon film layer adhered to an upper surface of the base film, the nylon film layer being made of a nylon film, and the nylon film layer may have a vertical thickness of 10 to 15 microns.

### [Advantageous Effects]

As described above, in the present invention, smooth, circular loop-shaped rings are formed on an outer surface of a slip tape to form a low coefficient of friction, to appropriately prevent or minimize the occurrence of annoying noise, and to improve slip properties, wherein the loop-shaped rings are knitted so as to be caught, thereby fundamentally preventing the rings from escaping, which significantly improves noise reduction and overall product quality, and by enhancing durability and wear resistance through the prevention of slipping, ensuring a long service life.

Furthermore, in the present invention, a separate nylon film is attached to a base film to reliably prevent breakage of the base film during the extrusion molding of a weather strip, thereby improving durability and workability.

### [Description of Drawings]

FIG. 1 is a schematic longitudinal sectional view of a slip tape according to the present invention;
FIG. 2 is a schematic longitudinal sectional view showing a ring fabric layer of the slip tape according to the present invention;
FIG. 3 is an example view showing an upper surface of the ring fabric layer according to the present invention in a knitted state;
FIG. 4 is an example view showing a lower surface of the ring fabric layer according to the present invention in the knitted state;
FIG. 5 is a schematic longitudinal sectional view showing a ring fabric layer of a slip tape according to another embodiment of the present invention;
FIG. 6 is a plan view photograph showing the slip tape according to the embodiment of FIG. 5;
FIG. 7 is a sectional view photograph showing the slip tape according to the embodiment of FIG. 5 applied to a weather strip;
FIG. 8 is a schematic longitudinal sectional view showing a slip tape according to another embodiment of the present invention;
FIG. 9 is a side view of a vehicle with a conventional flocking-type slip tape installed;
FIG. 10 is a schematic sectional view taken along line A-A of FIG. 9;
FIG. 11 is a schematic sectional view taken along line B-B of FIG. 9; and
FIG. 12 is a photograph showing a conventional slip tape.

### [Best Mode]

Hereinafter, preferred embodiments of the present invention will be described in more detail with reference to the accompanying drawings. However, it should be understood that the present invention may be implemented in various forms and is not limited to the described embodiments.

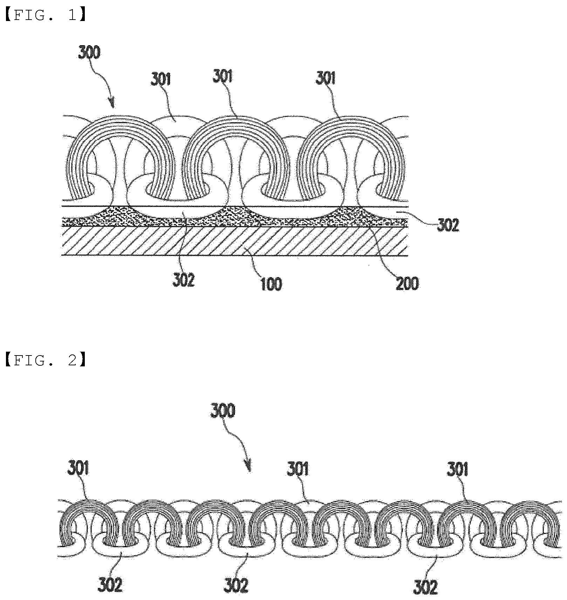

FIGs. 1 to 6 are schematic views and a photograph of a slip tape according to the present invention. As shown, the slip tape for automobile weather strips according to the present invention includes a base film 100, an adhesive layer 200 formed on an upper surface of the base film 100 by coating, and a ring fabric layer 300 attached to the adhesive layer 200, the ring fabric layer having a plurality of upper rings 301 protruding upward.

The base film 100 may be attached to an outer surface of each of a door belt weather strip and a door glass weather strip of an automobile, is made of an olefin-based resin, and provides a position for thermal adhesion to the outer surface of each of the door belt weather strip and the door glass weather strip while also providing a position for adhesive application.

Typically, when a weather strip is manufactured by extrusion using a material such as TPE or EPDM, which is a material for automobile weather strips, the base film 100 is thermally bonded to the weather strip due to heat generated during extrusion. At this time, in order to ensure compatibility with a material such as TPE or EPDM and to facilitate thermal bonding, an olefin-based resin is used as the base film 100.

Furthermore, the olefin-based resin is preferably a copolymer resin of polyethylene or polypropylene.

The base film 100 is manufactured using a T-die extrusion method and then one surface thereof is subjected to corona discharge surface treatment, which ensures that the adhesive layer 200 can be smoothly applied and the ring fabric layer 300 can be appropriately adhered in subsequent processes.

The vertical thickness of the base film 100 is preferably 30 to 60 microns. This is because, if the vertical thickness is less than 30 microns, it is difficult to bond with the ring fabric layer 300 and reduces adhesion to the weather strip due to excessive thinness, and if the vertical thickness is greater than 60 microns, the overall thickness of the slip tape becomes too large, causing the slip tape to become stiff and resulting in a significant decrease in adhesion to a curved area of the weather strip.

The adhesive layer 200 is formed by applying an adhesive to the upper surface of the base film 100, enabling the ring fabric layer 300 to adhere to the outer surface of the base film 100. The adhesive in the adhesive layer 200 is preferably a two-component urethane adhesive with good heat resistance.

A lower surface of the ring fabric layer 300 is attached to an upper surface of the adhesive layer 200, the ring fabric layer is formed of multifilament yarn made of polyester or nylon, the ring fabric layer is provided at an upper surface thereof with a plurality of upper rings 301 formed in a circular loop shape by knitting so as to be in tight contact with an outer surface of glass of the automobile, the upper rings protruding upward, and the ring fabric layer is provided at a lower surface thereof with lower rings 302 flatly formed by knitting such that the upper rings 301 can be caught and supported by the lower rings. The circular loop-shaped upper rings 301 without a cut surface reduce the coefficient of friction with the outer surface of the glass of the automobile, thereby preventing the occurrence of annoying noise.

Each upper ring 301 is formed round in a circular loop shape to reduce friction with the outer surface of the glass of the automobile and prevent or minimize annoying noise. Each upper ring 301 is formed of multifilament yarn, creating a plurality of loops in a single thread.

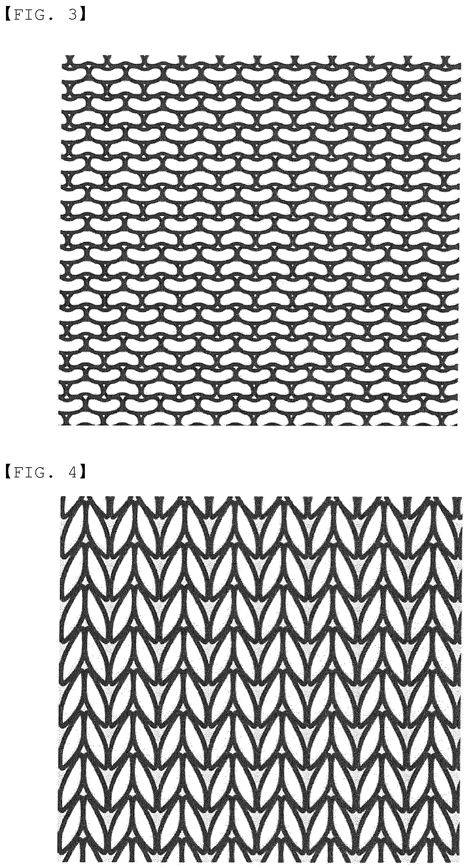

Each upper ring 301 is formed as a sinker loop ring of a knitted fabric formed by knitting multifilament yarn made of polyester or nylon such that the upper rings 301 are arranged on the upper surface thereof. A sinker loop surface formed by such sinker loop-shaped rings is formed by the upper rings 301 being densely arranged to form the back side of the knitted fabric, as shown in FIG. 3 in a planar form as an example.

The upper rings 301 are formed at a density of 6,000 to 7,000 per square inch and have a circular loop structure with a height of 0.4 to 0.6 mm, thereby providing high density, excellent abrasion resistance, stable slip properties, and low friction properties.

Each lower ring 302 is formed by knitting the multifilament yarn flatly, that is, making it flat, thereby forming a needle loop ring together with the upper ring 301. The lower ring serves to support the upper ring 301 by catching the same while providing a bonding area for the adhesive layer 200. A needle loop surface formed by the needle loop ring is formed by the lower rings 302 being densely knitted to form the surface of a knitted fabric, as illustrated in FIG. 4 in a planar form.

The ring fabric layer 300 constituted by the upper rings 301 and the lower rings 302 is a knitted fabric, and it is preferable that the ring fabric layer has a flat structure of a weft knitted fabric that is advantageous for forming a loop shape. This flat structure of the weft knitted fabric refers to a structure where loops are pulled from the back side to the front side using a set of needles. The flat structure of the weft knitted fabric is primarily manufactured using a circular knitting machine.

The flat structure of the weft knitted fabric forms needle loops, and forms columns in a V-shape with grooves formed between the columns (see FIG. 4). The back side of the flat structure of the weft knitted fabric forms semicircular pillars of sinker loops, with these pillars forming columns and grooves between the columns (see FIG. 3).

The ring fabric layer 300 is preferably formed by blending spandex yarn into the multifilament yarn made of polyester or nylon at a weight ratio of 10 to 30% of the total weight of the multifilament yarn. When the weft knitted fabric containing the blended spandex yarn is woven using yarn so as to have high elasticity and shrunk (contracted) to a large extent, the sinker loops protrude convexly upward, appropriately forming a circular loop shape.

If the spandex yarn is blended at a weight ratio of less than 10%, the elasticity decreases sharply, making it difficult to form a circular ring shape. If the spandex yarn is blended at a weight ratio of more than 30%, the elasticity becomes excessive, making it difficult to control the height of the ring shape.

Here, spandex yarn refers to a general term for synthetic fibers formed of elastic yarn made of polyurethane fibers, which is fiber yarn with excellent elasticity.

The vertical thickness of the ring fabric layer 300 is preferably 0.4 to 0.6 mm, as this is the most appropriate thickness for the slip layer of the weather strip.

The ring fabric layer 300 may be woven by blending DTY yarn with a denier of 50 to 75 and spandex yarn with a denier of 15 to 30 at a blending ratio of 10 to 30 weight percent. The ring fabric layer 300 thus formed forms a high-density circular ring layer, thereby exhibiting high slip properties.

In addition, the ring fabric layer 300 may be woven by blending polyester or nylon-based 50d/36f DTY yarn or 50d/48f DTY yarn with spandex yarn at a blending ratio of 10 to 15 weight percent. This also forms a high-density circular ring layer, thereby exhibiting high slip properties.

Here, polyester or nylon DTY (Draw Textured Yarn) refers to flame-treated multifilament synthetic fiber yarn, where 50d/36f denotes 36 monofilament yarn combined to form a 50-denier thickness, while 50d/48f refers to 48 monofilament yarn combined to form a 50-denier diameter. Spandex yarn is used to impart elasticity, facilitating the formation of circular rings, and it is preferable to use a smaller diameter than DTY yarn.

The slip tape configured in this manner constitutes smooth circular loop-shaped upper rings 301 on the outer surface thereof, thereby creating a low coefficient of friction and appropriately preventing or minimizing the occurrence of annoying noise while improving slip properties. The loop-shaped upper rings 301 are knitted so as to be caught by the lower rings 302, thereby fundamentally preventing the upper rings 301 from escaping.

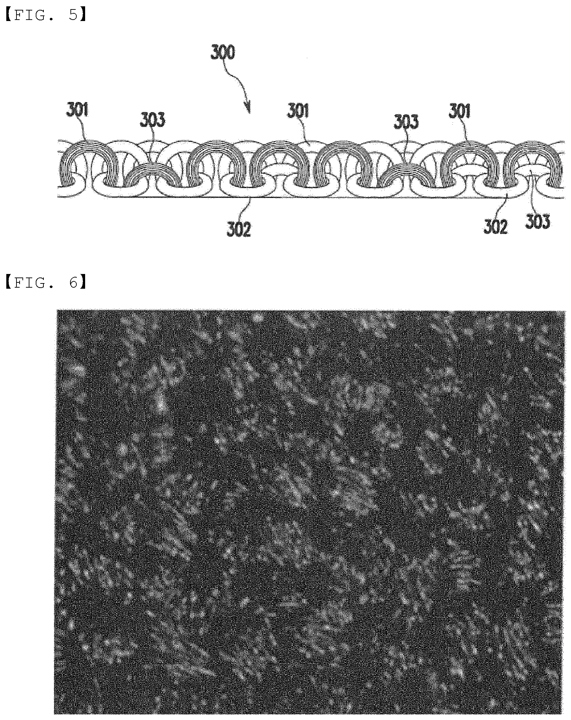

FIGs. 5 to 7 are a schematic view and photographs showing a ring fabric layer of a slip tape according to another embodiment of the present invention. As shown, the ring fabric layer 300 of the slip tape for automobile weather strips according to the other embodiment of the present invention further includes recessed rings 303 formed at irregular intervals between the upper rings 301 so as to be recessed farther downward than the upper rings 301 to form irregular grooves.

The recessed rings 303 are formed lower than the upper rings 301 and are irregularly distributed between the upper rings 301, allowing the grooves formed by the continuous arrangement of the plurality of upper rings 301 to be irregularly formed.

Here, the regular grooves formed by the upper rings 301 serve as a factor to increase the coefficient of friction by maintaining a consistent contact area with the outer surface of the glass of the automobile.

As described above, the grooves formed by the continuous arrangement of the upper rings 301 are irregularly formed by the recessed rings 303, thereby reducing the coefficient of friction with the glass of the automobile and improving slip properties.

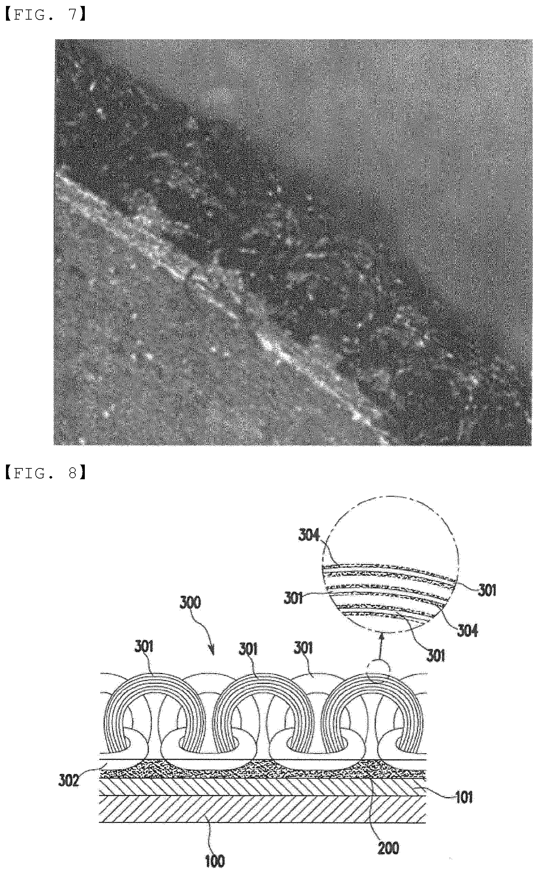

The upper rings 301 and recessed rings 303 of the ring fabric layer 300 manufactured in this manner are shown in the photograph of FIG. 6, and the ring fabric layer attached to weather strip is shown in the sectional view photograph of FIG. 7.

FIG. 8 is a schematic longitudinal sectional view showing a slip tape according to another embodiment of the present invention. As shown, the ring fabric layer 300 of the slip tape for automobile weather strips according to the other embodiment of the present invention further includes a flexible treatment layer 304 formed by impregnating an amino-modified silicone-based softening agent emulsion on an outer surface thereof.

The flexible treatment layer 304 serves to make the upper rings 301 of the ring fabric layer 300 more flexible, thereby maintaining a lower coefficient of friction while further improving enhancing slip properties.

The flexible treatment layer 304 is preferably configured such that the residual silicon solid content after drying is 1 to 3 g per square meter. This is because, if the residual solid content is less than 1 g, the improvement in slip properties is minimal, and if the residual solid content is more than 3 g, the silicon solid content may be transferred to the glass surface of the automobile, i.e., the silicon solid content may be adhered to the glass surface of the automobile.

According to experimentally determined results, the coefficient of friction between the surface of conventional slip tape formed by a general flocking method and the glass surface of an automobile was 0.32 to 0.38 (at room temperature and humidity of 40 to 50%), whereas the coefficient of friction of the slip tape according to the present invention was 0.21 to 0.30, indicating improved slip properties. The slip tape in which the formation of regular grooves was suppressed by irregularly arranging the recessed rings and which was treated with an amino-modified silicone-based softening agent according to the other embodiment of the present invention had a coefficient of friction of 0.18 to 0.26, confirming further improved slip properties.

The base film 100 of the slip tape according to the present invention further includes a nylon film layer 101 adhered to an upper surface thereof, the nylon film layer being made of a nylon film. The nylon film layer 101 serves to prevent breakage of the base film 100 due to high temperature and high pressure during the extrusion molding of the weather strip.

The nylon film layer 101 preferably has a thickness of 10 to 15 microns. This is because, if the thickness of the nylon film layer 101 is less than 10 microns, the durability becomes too low to adequately prevent breakage of the base film 100, and if the thickness of the nylon film layer is greater than 15 microns, the nylon film layer may be unnecessarily thick, causing the base film 100 to become too thick overall.

Although the preferred embodiments of the present invention have been described above, the present invention may use various changes, modifications, and equivalents. It is clear that the present invention may be applied in the same manner by appropriately modifying the above embodiments. Therefore, the above description does not limit the scope of the present invention, which is defined by the scope of the appended claims.

Meanwhile, although the present invention has been described above in detail with reference to specific embodiments, it will be obvious to those skilled in the art that various modifications are possible within the scope of the present invention.

## Claims

1. A slip tape for automobile weather strips, the slip tape comprising:
a base film (100) attached to an outer surface of each of a door belt weather strip and a door glass weather strip of an automobile, the base film being made of an olefin-based resin;
an adhesive layer (200) formed by applying an adhesive to an upper surface of the base film (100); and
a ring fabric layer (300) having a lower surface attached to an upper surface of the adhesive layer (200), the ring fabric layer being formed of multifilament yarn made of polyester or nylon, the ring fabric layer comprising a plurality of circular loop-shaped upper rings (301) knitted on an upper surface thereof to protrude upward so as to be in tight contact with an outer surface of glass of the automobile and lower rings (302) flatly knitted on a lower surface thereof such that the upper rings (301) are caught and supported thereby.

2. The slip tape according to claim 1, wherein each of the upper rings (301) is a sinker loop ring of a knitted fabric formed by knitting multifilament yarn made of polyester or nylon.

3. The slip tape according to claim 1, wherein the ring fabric layer (300) is formed by blending spandex yarn into multifilament yarn made of polyester or nylon at a weight ratio of 10 to 30% of a total weight of the multifilament yarn.

4. The slip tape according to claim 1, wherein the ring fabric layer (300) further comprises recessed rings (303) formed at irregular intervals between the upper rings (301) so as to be recessed farther downward than the upper rings (301) to form irregular grooves.

5. The slip tape according to claim 1, wherein the ring fabric layer (300) further comprises a flexible treatment layer (304) formed by impregnating an amino-modified silicone-based softening agent emulsion on an outer surface of the ring fabric layer (300).

6. The slip tape according to claim 5, wherein the flexible treatment layer (304) is configured such that a residual silicon solid content after drying is 1 to 3 g per square meter.

7. The slip tape according to claim 1, wherein the ring fabric layer (300) has a vertical thickness of 0.4 to 0.6 mm and is woven by blending DTY yarn with a denier of 50 to 75 and spandex yarn with a denier of 15 to 30 at a blending ratio of 10 to 30 weight percent.

8. The slip tape according to claim 1, wherein the ring fabric layer (300) has a vertical thickness of 0.4 to 0.6 mm and is woven by blending polyester or nylon-based 50d/36f DTY yarn or 50d/48f DTY yarn with spandex yarn at a blending ratio of 10 to 15 weight percent.

9. The slip tape according to claim 1, wherein the upper rings (301) are formed at a density of 6,000 to 7,000 per square inch and each have a height of 0.4 to 0.6 mm.

10. The slip tape according to claim 1, wherein
the base film (100) has a vertical thickness of 30 to 60 microns,
the base film further comprises a nylon film layer (101) adhered to an upper surface of the base film (100), the nylon film layer being made of a nylon film, and
the nylon film layer (101) has a vertical thickness of 10 to 15 microns.
